# EUROPÄISCHE PATENTSCHRIFT

(11) **EP 3 019 671 B1**
(45) Veröffentlichungstag und Bekanntmachung des Hinweises auf die Patenterteilung: **13.05.2020**
(21) Anmeldenummer: 14736298.2
(22) Anmeldetag: 04.07.2014
(51) Int. Cl.: E03C 1/05, F16K 31/385, F16K 11/07

(54) **SANITÄRARMATUR MIT MISCHWELLE**
SANITARY FITTING WITH MIXER SHAFT
ROBINET SANITAIRE À ARBRE MÉLANGEUR

(30) Priorität: 11.07.2013 DE 102013011598
(43) Veröffentlichungstag der Anmeldung: 18.05.2016
(73) Patentinhaber: Grohe AG, 58675 Hemer (DE)
(72) Erfinder: SCHÖNBECK, Heiko, 31712 Niedernwöhren (DE); TÜSHAUS, Jan Philipp, 58675 Hemer (DE)
(86) Internationale Anmeldenummer: PCT/EP2014/001855
(87) Internationale Veröffentlichungsnummer: WO 2015/003792

(56) Entgegenhaltungen:
- DE-A1- 19 625 252
- DE-A1-102010 009 215
- DE-B3- 10 320 636
- FR-A1- 2 232 714
- GB-A- 1 537 020
- US-A1- 2003 140 966

## Beschreibung

Die vorliegende Erfindung betrifft eine Sanitärarmatur mit einer Mischwelle. Insbesondere findet die Erfindung Anwendung bei Sanitärarmaturen, die energieautark sind, welche also bspw. eine eigenständige Energieversorgung bzw. ein eigenständiges Energiegewinnungssystem aufweisen. Diesbezüglich offenbart DE10320636B3 einen manuell/automatisch handhabbaren Wasserhahn aufweisend ein Gehäuse, das auf einer Innenseite mit einem Wassereinlass-Basisteil versehen ist, ein Wasserauslaussventil, ein Elektromagnetventil, eine Induktionseinrichtung und eine Steuereinrichtung. Die Steuereinrichtung weist eine Ventilstange, eine Spindel und einen Drehknopf auf. Der Drehknopf ist in der Lage, die Ventilstange so zu beaufschlagen, dass diese sich dreht, oder die Spindel so zu beaufschlagen, dass diese in axialer Richtung verschoben wird. Wenn die Ventilstange gedreht wird, kann dadurch die Wassertemperatur gesteuert werden. Wenn die Spindel in axialer Richtung verschoben wird, kann dadurch der Wasserhahn so gesteuert werden, dass Wasser automatisch oder manuell zuführbar ist

Bei energieautarken Armaturen wird zur Energieversorgung bzw. zur Energiegewinnung beispielsweise eine Mikroturbine statt einem Netzteil oder einer Batterie eingesetzt. Die (während des Betriebs selbst) erzeugte Energie wird dann bspw. in Kondensatoren gespeichert. Durch eine Selbstentladung bei langer Nichtbenutzung und/oder infolge des Betriebs einer näherungs- oder berührungsempflindlichen Sensorelektronik im Bereitschaftsmodus wird permanent Energie verbraucht. Die Restenergie der Kondensatoren kann dann zu bestimmten Zeitpunkten nicht mehr ausreichen, um die Armatur zu bedienen. Gleichzeitig ist es nur möglich Energie zu gewinnen, wenn ein Wasserlauf durch die Sanitärarmatur stattfindet und damit die energiegewinnende Mikroturbine in Gang gesetzt wird.

Auch wenn hier insbesondere die energieautarken Sanitärarmaturen angesprochen werden, so kann die Erfindung gleichwohl bei anderen Sanitärarmaturen ebenfalls zum Einsatz kommen. So ist es bspw. möglich, einen Notbetrieb für Sanitärarmaturen umzusetzen, bei denen Armaturen mit einem (bistabilen) Magnetventil ausgeführt sind und/oder die Sanitärarmatur eine bereits entleerte Batterie zur Stromversorgung aufweist.

Bei diesen Sanitärarmaturen besteht insbesondere das Bedürfnis, für den Fall einer nicht mehr vorhandenen Betriebsfähigkeit aufgrund unzureichender Energie, ausreichend Energie wieder neu zu generieren bzw. die Funktionalität der Sanitärarmatur im Notbetrieb aufrecht zu erhalten, bis bspw. ein Service und/oder ein (manueller) Austausch der Energiespeicher vorgenommen werden kann.

Dabei ist auch wünschenswert, dass die Sanitärarmatur in diesem Notbetrieb schnell, einfach und komfortabel betrieben werden kann, insbesondere ohne eine technisch aufwendige Umgestaltung der Sanitärarmatur.

Diese Aufgaben werden gelöst mit einer Sanitärarmatur gemäß den Merkmalen des Patentanspruchs 1. Vorteilhafte Weiterbildungen der Erfindung sind in den abhängigen Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, erläutert die Erfindung und gibt weitere Ausführungsbeispiele an.

Die Sanitärarmatur weist zumindest einen Mischraum mit einem ersten Wasseranschluss, einem zweiten Wasseranschluss sowie einen Wasserablauf auf. In dem Mischraum ist eine Mischwelle angeordnet. Weiter ist ein Ventil vorgesehen, das dem Wasserablauf zugeordnet ist. Die Mischwelle ist in dem Mischraum verschiebbar angeordnet und kann einen Bypass-Kanal zwischen Mischraum und Ventil freigeben und verschließen.

Die Sanitärarmatur ist hier insbesondere mit zwei Wasseranschlüssen ausgeführt, nämlich mit einem Kaltwasseranschluss und einem Warmwasseranschluss. Beide Wasseranschlüsse münden in den Mischraum, wobei deren Mündungen durch ein entsprechend geformtes äußeres Profil der Mischwelle vollständig bzw. teilweise geöffnet/geschlossen werden können. Durch eine Drehung der Mischwelle ist also möglich, den Zufluss von Kaltwasser und/oder Warmwasser aus dem ersten Wasseranschluss bzw. dem zweiten Wasseranschluss in den Mischraum und schließlich auch in den Wasserablauf zu steuern.

Das Ventil, das bspw. in dem Wasserablauf selbst positioniert ist, gibt den Wasserablauf bedarfsgerecht frei, insbesondere wenn eine Wasseranfrage durch den Bediener entsprechend gewünscht wird. Zur Betätigung des Ventils kann die Sanitärarmatur mechanisch und/oder elektrisch aktiviert werden, so dass dann durch ein mechanisches Bewegungssystem und/oder eine elektrische Kontrolleinheit das Ventil geschaltet wird.

Die hier vorliegende Sanitärarmatur zeichnet sich nun insbesondere auch dadurch aus, dass zumindest abschnittsweise parallel zu dem Wasserablauf ein Bypass-Kanal vorgesehen ist, mit dem das Ventil umgangen und/oder druckentlastet werden kann. Der Bypass-Kanal mündet (auch) in den Mischraum bzw. setzt sich von diesem Mischraum fort. Dabei ist die Mischwelle im Regelfall so positioniert, dass diese den Bypass-Kanal blockiert bspw. versperrt. Für einen Notbetrieb ist aber möglich, die Mischwelle in dem Mischraum zu verschieben, insbesondere zumindest teilweise aus dem Mischraum herauszuziehen, wobei dann der Strömungsquerschnitt des Bypass-Kanals bzw. die Mündung ausgehend von dem Mischraum freigegeben wird. Ist der Notlaufbetrieb beendet, kann die Mischwelle wieder eingeschoben werden, so dass der Bypass-Kanal blockiert ist. Der Bypass-Kanal erstreckt sich insbesondere bis hin zu dem Ventil, so dass mit dem zum Ventil zugeführten Wasser der Betrieb des Ventils (zeitlich begrenzt bzw. temporär) beeinflussbar, anpassbar und/oder regelbar ist. Das dem Ventil über den Bypass-Kanal zugeführte Wasser kann anschließend wieder dem Wasserablauf zugeführt werden. Der Bypass-Kanal bietet demnach einen bedarfsgerecht freigebbaren Pfad für das Wasser aus dem Mischraum, mit dem (wenigstens) ein Abschnitt des (Haupt-)Wasserablaufs umgangen wird.

Weiter ist vorgesehen, dass die Mischwelle eine Hohlwelle und eine innenliegende Steckwelle umfasst. Demnach wird hier auch vorgeschlagen, dass die Mischwelle mehrteilig ausgeführt ist. Die Hohlwelle umfasst dabei insbesondere das außenliegende Profil, das im Mischraum rotiert werden kann. Die innenliegende Steckwelle tritt insbesondere im Bereich einer Stirnseite der Mischwelle aus der Hohlwelle hervor und erstreckt sich in den Mischraum bzw. einen Nebenraum des Mischraums hinein, in dem der Bypass-Kanal ausgebildet ist.

Die innenliegende Steckwelle ist entlang einer Zentralachse relativ zur Hohlwelle verschiebbar ausgeführt. Dies heißt mit anderen Worten auch, dass die Hohlwelle (nur) drehbar in einem Gehäuse der Sanitärarmatur angeordnet ist, während die Steckwelle relativ zur Hohlwelle verschoben bzw. bewegt werden kann. Dies kann bedeuten, dass die Steckwelle teilweise aus der Hohlwelle herausgezogen und eingeschoben werden kann. Darüber hinaus sind die Hohlwelle und die Steckwelle gegeneinander mit einem Federelement verspannt. Das (mindestens eine) Federelement wirkt zwischen Hohlwelle und Steckwelle insbesondere so, dass die Steckwelle aus der Hohlwelle hin zum Mischraum verspannt wird. Das Federelement kann als Schraubenfeder ausgeführt sein. Damit wird insbesondere erreicht, dass die Steckwelle sicher an dem Bereich des Mischraums zur Anlage kommt, und somit auch unter Berücksichtigung von

Bauteiltoleranzen und wiederholter Betätigung sicher den Bypass-Kanal verschließen kann.

Einer Weiterbildung der Sanitärarmatur zufolge ist vorgesehen, dass die Mischwelle einen Griff aufweist, der außerhalb eines Gehäuses der Sanitärarmatur angeordnet ist. Mit dem Griff wird dem Bediener bspw. die Möglichkeit eingeräumt, die Mischwelle zu drehen. Damit ist eine gezielte Temperatursteuerung des Wassers ermöglicht, indem das Profil der Mischwelle entsprechend zu den beiden Wasseranschlüssen ausgerichtet ist. Dieser Griff ist nun (im Notbetrieb) auch aus dem Gehäuse (teilweise) herauszuziehen, wobei in diesem Fall bevorzugt (nur) die Steckwelle um eine vorgegebene Distanz aus der Hohlwelle herausgezogen werden kann. Damit wird gleichzeitig der gegenüberliegende Abschnitt der Steckwelle, der die Mündung des Bypass-Kanals verschließt, von der Mündung bzw. dem Mischraum entfernt, so dass nun in dem Mischraum befindliches Wasser dort abfließen kann.

Weiterhin ist vorteilhafterweise vorgesehen, dass der Bypass-Kanal so ausgebildet ist, dass dort entlang strömendes Wasser das Ventil betätigen kann. Insbesondere mündet der Bypass-Kanal so in das Ventil, dass die Membran, die den Verschluss des Wasserablaufs bewirkt, druckentlastet wird, also den Wasserablauf freigibt. Damit ist dann ein (ordentlicher bzw. rein mechanischer) Betrieb weiterhin möglich, insbesondere bis die ursprüngliche Funktionalität wieder hergestellt wird.

Dabei ist weiter bevorzugt, dass das Ventil ein Magnetventil ist. Hierbei handelt es sich insbesondere um ein sogenanntes bistabiles Magnetventil. Gerade bei Magnetventilen, die üblicherweise elektronisch betrieben werden, wird hier ein mechanisches Betreiben (Öffnen und/oder Schließen) durch das Öffnen/Schließen des Bypass-Kanals über die Verschiebung der Mischwelle ermöglicht.

Ganz besonders bevorzugt ist bei der Sanitärarmatur ein energieautarkes Betätigungssystem für das Ventil vorgesehen. Das heißt mit anderen Worten auch, dass die Betätigung des Ventils elektrisch erfolgt, wobei (temporär oder dauerhaft) keine wechselbaren Energieträger (Batterien) und/oder kein Netzteil vorhanden sind bzw. eingesetzt werden müssen. Vielmehr wird durch eine entsprechende Fließbewegung des Wassers selbst Energie zum Betrieb des Ventils generiert. Hierfür können gleichwohl Energiespeicher vorgesehen sein, die die gewonnene Energie Zwischenspeichern, wie bspw. Kondensatoren. Indem die Mischwelle hier verschoben wird, kann der Wasserfluss in Gang gesetzt werden, wobei dieser Zustand die Neugewinnung von Energie ermöglicht und damit auch wieder ein Aufladen der Kondensatoren und/oder einen elektrischen Betrieb des Ventils.

Durch das Ziehen an der Mischwelle wird somit der Bypass-Kanal zu vorgegebenen Zeitpunkten geöffnet, wobei hierbei insbesondere die Membran eines Magnetventils entlastet wird. Dadurch öffnet sich das Magnetventil (Druckentlastung) und der Wasserabfluss wird geöffnet.

Die zweiteilige Ausgestaltung der Mischwelle führt insbesondere dazu, die Bedienkräfte im Notbetrieb möglichst gering zu halten. Dies wird insbesondere dadurch erreicht, dass für die Bewegung der innenliegenden Steckwelle eine geringere Kraft erforderlich ist.

Die Ausgestaltung der zweiteiligen Mischwelle mit der Federverspannung hat insbesondere den Vorteil, dass ein Spiel bzw. Toleranzen im Bedienelement verhindert bzw. ausgeglichen werden kann.

Zudem wird erreicht, dass auf zusätzliche Notbedienungselemente, gerade bei energieautarken Sanitärarmaturen, verzichtet werden kann. Dies vergrößert insbesondere die Gestaltungsfreiheit für die Komponenten der Sanitärarmatur. Weiterhin ist die Notbedienung solcher Armaturen besonders einfach und kann daher (kurzfristig) auch von jedem Benutzer problemlos ausgeführt werden.

Die Erfindung sowie das technische Umfeld werden nachfolgend anhand der Figuren näher erläutert. Es ist darauf hinzuweisen, dass in den Figuren gleiche Bauteile mit gleichen Bezugszeichen versehen sind. Die Figuren zeigen besonders bevorzugte Ausführungsbeispiele, auf die die Erfindung jedoch nicht beschränkt sein soll. Es zeigen schematisch:
- Fig. 1:: ein erstes Ausführungsbeispiel einer Sanitärarmatur im Normalbetrieb,
- Fig. 2:: das Ausführungsbeispiel aus Fig. 1 mit verschobener Mischwelle, und
- Fig. 3:: den Aufbau einer energieautarken Sanitärarmatur.

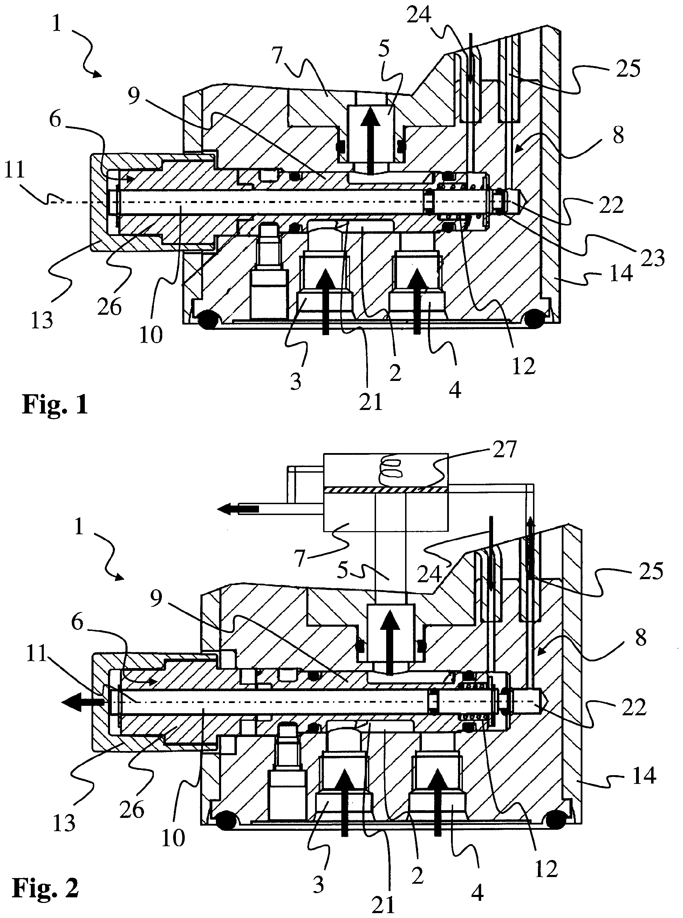

Fig. 1 zeigt ein Detail einer Sanitärarmatur 1 im Schnitt, wobei dieses Detail insbesondere die Region der Sanitärarmatur 1 betrifft, in der der Mischraum 2 angeordnet ist. Die Sanitärarmatur 1 kann bspw. mit dem Gehäuse 14 an einer Wand montiert werden, so dass der erste Wasseranschluss 3 und der zweite Wasseranschluss 4 insbesondere mit einer Kaltwasserversorgung und einer Heißwasserversorgung verbunden sind.

In dem Mischraum 2 ist eine Mischwelle angeordnet. Diese weist im Bereich des Mischraums 2 außen ein Profil 21 auf, das sich über den Umfang mindestens abschnittsweise erstreckt. Das Profil 21 ist insbesondere (einstückig) mit der Oberfläche der Mischwelle ausgebildet. Das Profil 21 dient dazu, die Mündungen des ersten Wasseranschlusses 3 und/oder des zweiten Wasseranschlusses 4 zu öffnen und/oder zu schließen. Hierfür kann die Mischwelle 6, insbesondere über den Griff 13, verdreht werden. Das Mischwasser verlässt den Mischraum 2 über den Wasserablauf 5. Der Wasserablauf 5 kann bedarfsgerecht mittels eines Ventils 7 geöffnet und geschlossen werden, so dass hierüber geregelt werden kann, ob Wasser aus der Sanitärarmatur austreten soll oder nicht.

Bei der hier dargestellten Ausführungsvariante der Mischwelle 6 bilden mehrere Bauteilkomponenten zusammen die Mischwelle aus. Das Profil 21 ist hier außen an einer Hohlwelle 9 ausgebildet, die passend in dem Mischraum 2 positioniert ist. Die Hohlwelle 9 weist eine Bohrung auf, so dass darin eine innenliegende Steckwelle 10 positioniert ist. Die Steckwelle 10 durchdringt die Hohlwelle 9 vollständig. Hin zum Griff 13 ist ein Wellensitz 26 vorgesehen, mit dem die Steckwelle 10 verdrehsicher und ortsfest mit dem Griff 13 verbunden ist. Der Wellensitz 26 greift stirnseitig gegenüberliegend von dem Griff 13 auch in die Hohlwelle 9 ein. Dieser Eingriff erlaubt, dass bei Verdrehen des Griffs 13 gleichzeitig die Hohlwelle 9 gedreht wird. Gegenüberliegend des Griffs 13 ragt die Steckwelle 10 in Richtung der Zentralachse 11 über die Hohlwelle 9 hinaus. Sie erstreckt sich hier insbesondere auch in einen Nebenraum 22 des Mischraums 2. Insbesondere ragt ein Teil der Steckwelle 10 in den als Sackbohrung ausgeführten Nebenraum 22 so hinein, dass ein Strömungsfluss in den Nebenraum 22 unterbunden ist. Hierfür liegt die Steckwelle 10 insbesondere umfänglich, ggf. mittels Dichtungen 23 abgedichtet, flüssigkeitsdicht an der äußeren Wandung des Nebenraums 22 an. Damit dieser Bereich auch unter Berücksichtigung von Bauteiltoleranzen und wiederholter Betätigung sicher flüssigkeitsdicht anliegt, ist die Hohlwelle 9 dort mit einer Aufnahme (z.B. nach Art eines Hohlraumerweiterung) ausgebildet, in der ein Federelement 12 vorgesehen ist. Das Federelement 12 verspannt die Hohlwelle 9 und die Steckwelle 10 in der Weise, dass der in den Mischraum 2 ragende Abschnitt der Steckwelle 10 in Richtung des Nebenraums 22 gedrückt wird. Dieses Federelement 12 unterstützt zudem auch das Einschieben der Steckwelle 10 über den Griff 13, wenn die Notbetätigung deaktiviert werden soll.

Der Mischraum 2 hat zudem Kontakt zu einem Bypass-Kanal 8. Der Bypass-Kanal 8 ist hier mit einem Zufluss 24 hin zum Mischraum 2 und einem Abfluss 25 weg vom Mischraum 2 bzw. dem Nebenraum 22 ausgeführt. Die Steckwelle 10 ist so positioniert, dass sie eine Flüssigkeitsdichtung zwischen dem Zufluss 24 und dem Abfluss 25 ausbildet. Im Normalbetrieb findet demnach keine Wasserströmung über den Bypass-Kanal 8 statt.

In Fig. 2 ist nun die Situation veranschaulicht, dass die Mischwelle 2 über den Griff 13 entlang der Zentralachse 11 (teilweise) verschoben wurde. Hierbei wurde die Steckwelle 10 zusammen mit dem Wellensitz 26 und dem Griff 13 um eine vorgegebene Distanz aus dem Gehäuse 14 herausgezogen, insbesondere gegen die Federkraft des gegenüberliegend der Hohlwelle 9 angeordneten Federelements 12. Bei dieser Ausrückbewegung bleibt die Position der Hohlwelle 9 unverändert. Diese Relativbewegung zwischen Steckwelle 10 und Hohlwelle 9 führt dazu, dass die Steckwelle 10 insbesondere den Nebenraum 22 verlässt und damit ein Strömungsfluss vom Zufluss 24 hin zum Abfluss 25 ermöglicht. Somit strömt in dieser Notbetriebssituation Wasser über den Bypass-Kanal 8, bei der die Mischwelle 6 (teilweise) ausgerückt ist. Das über den Abfluss 25 des Bypass-Kanals 8 strömende Wasser fließt zum Ventil 7, insbesondere einem Magnetventil, hin und entlastet dort die Membran 27. Somit gibt die Membran 27 den Wasserablauf 5 frei und die Sanitärarmatur liefert Wasser. Bevorzugt ist hierbei, dass über den Griff 13 gleichwohl eine Rotation der Hohlwelle 9 möglich ist, so dass die Funktion der Temperaturregulierung auch im Notbetrieb noch möglich ist.

Falls der Notbetrieb beendet werden soll, kann die Mischwelle 6 wieder eingeschoben werden und der Normalbetrieb (siehe Situation in Fig. 1) ist wieder möglich.

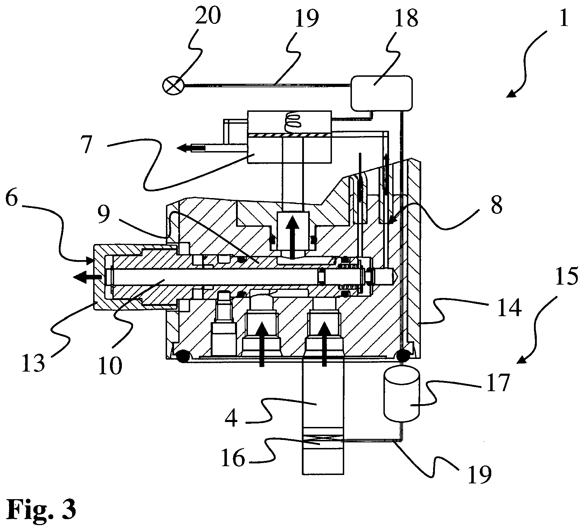

Gerade eine solche vorübergehende Aktivierung der Sanitärarmatur 1 ist sinnvoll bei Armaturen, die ein energieautarkes Betätigungssystem 15 bilden. Ein Ausführungsbeispiel ist hierfür in Fig. 3 dargestellt. Zu erkennen ist, dass im zweiten Wasseranschluss 4 eine Turbine 16 integriert ist. Diese wird beim Durchfluss von Wasser zur Bewegung motiviert, wobei diese Bewegung in Energie umgesetzt wird. Die Energie wird über Verbindungsleitungen 19 einem (beladbaren und entladbaren) Energiespeicher 17 zugeführt, bspw. einem Kondensator. Weiterhin ist bei der Sanitärarmatur 1 eine Kontrolleinheit 18 vorgesehen, die ggf. auch über einen Sensor 20 mit der Verbindungsleitung 19 verbunden ist. Wird nun mechanisch und/oder sensorisch ermittelt, dass das Ventil 7 geöffnet/geschlossen werden soll, betätigt die Kontrolleinheit 18 das Ventil 7 elektrisch. Für den Fall, dass bspw. nach einer langen Stillstandszeit in dem Energiespeicher 17 nicht mehr ausreichend Energie für die Kontrolleinheit 18 und/oder dem Betrieb des Ventils 7 bereitgestellt wird, ermöglicht die Verschiebung der Mischwelle 6 in dem Mischraum 2 und die damit verbundene Öffnung des Bypass-Kanals 8 zwischen Mischraum 2 und Ventil 7, dass das Ventil 7 (mechanisch) geöffnet wird und erneut eine Wasserströmung auch durch den zweiten Wasseranschluss 4 hindurch erfolgt. Dies erlaubt die Energieneugewinnung mittels der Turbine 16.

Damit löst die Erfindung die eingangs gestellten Aufgaben. Insbesondere kann die Sanitärarmatur in einem Notbetrieb schnell, einfach und komfortabel betrieben werden, insbesondere ohne eine technisch aufwendige Umgestaltung der Sanitärarmatur.

Vorsorglich sei abschließend noch darauf hingewiesen, dass die in Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

### Bezugszeichenliste

- 1: Sanitärarmatur
- 2: Mischraum
- 3: erster Wasseranschluss
- 4: zweiter Wasseranschluss
- 5: Wasserablauf
- 6: Mischwelle
- 7: Ventil
- 8: Bypass-Kanal
- 9: Hohlwelle
- 10: Steckwelle
- 11: Zentralachse
- 12: Federelement
- 13: Griff
- 14: Gehäuse
- 15: Betätigungssystem
- 16: Turbine
- 17: Energiespeicher
- 18: Kontrolleinheit
- 19: Verbindungsleitung
- 20: Sensor
- 21: Profil
- 22: Nebenraum
- 23: Dichtung
- 24: Zufluss
- 25: Abfluss
- 26: Wellensitz
- 27: Membran

## Patentansprüche

1. Sanitärarmatur (1), aufweisend zumindest einen Mischraum (2) mit einem ersten Wasseranschluss (3), einem zweiten Wasseranschluss (4) sowie einen Wasserablauf (5), wobei in dem Mischraum (2) eine Mischwelle (6) angeordnet ist, sowie ein Ventil (7), das dem Wasserablauf (5) zugeordnet ist, wobei die Mischwelle (6) in dem Mischraum (2) verschiebbar angeordnet ist und einen Bypass-Kanal (8) zwischen Mischraum (2) und Ventil (7) freigeben und verschließen kann, wobei der Bypass-Kanal (8) zumindest abschnittsweise parallel zu dem Wasserablauf (5) vorgesehen ist und das Ventil (7) durch eine Kontrolleinheit (18) elektrisch betätigbar ist, wobei die Mischwelle (6) eine Hohlwelle (9) und eine innenliegende Steckwelle (10), welche entlang einer Zentralachse (11) relativ zur Hohlwelle (9) verschiebbar ausgeführt ist, umfasst, **dadurch gekennzeichnet, dass** die Hohlwelle (9) und die Steckwelle (10) gegeneinander mit einem Federelement (12) verspannt sind.

2. Sanitärarmatur (1) nach einem der vorhergehenden Patentansprüche, bei der die Mischwelle (6) einen Griff (13) aufweist, der außerhalb eines Gehäuses (14) der Sanitärarmatur (1) angeordnet ist.

3. Sanitärarmatur (1) nach einem der vorhergehenden Patentansprüche, bei der der Bypass-Kanal (8) so ausgebildet ist, dass dort entlang strömendes Wasser das Ventil (7) betätigen kann.

4. Sanitärarmatur (1) nach einem der vorhergehenden Patentansprüche, bei der das Ventil (7) ein Magnetventil ist.

5. Sanitärarmatur (1) nach einem der vorhergehenden Patentansprüche, bei der ein energieautarkes Betätigungssystem (15) für das Ventil (7) vorgesehen ist.

## Claims

1. A sanitary fitting (1) having at least one mixing space (2) with a first water connection (3), a second water connection (4) and a water drain (5), wherein a mixer shaft (6) and also a valve (7), which is associated with the water drain (5), are arranged in the mixing space (2), wherein the mixer shaft (6) is arranged displaceably in the mixing space (2) and can unblock and close a bypass channel (8) between the mixing space (2) and the valve (7), wherein the bypass channel (8) is provided, at least in sections, parallel to the water drain (5) and the valve (7) can be actuated electrically by a control unit (18), wherein the mixer shaft (6) comprises a hollow shaft (9) and an inside-lying plug-in shaft (10), which is configured to be displaceable relative to the hollow shaft (9) along a center axis (11), **characterized in that** the hollow shaft (9) and the plug-in shaft (10) are braced against each other by a spring element (12).

2. The sanitary fitting (1) according to any one of the preceding claims, in which the mixer shaft (6) has a handle (13), which is arranged outside a housing (14) of the sanitary fitting (1).

3. The sanitary fitting (1) according to any one of the preceding claims, in which the bypass channel (8) is configured such that water flowing along the same can actuate the valve (7).

4. The sanitary fitting (1) according to any one of the preceding claims, in which the valve (7) is a solenoid valve.

5. The sanitary fitting (1) according to any one of the preceding claims, in which provision is made of a power-autonomous actuation system (15) for the valve (7).

## Revendications

1. Robinetterie sanitaire (1), comportant au moins un espace mélangeur (2) pourvu d'un premier raccord d'eau (3), d'un deuxième raccord d'eau (4), ainsi que d'une sortie d'eau (5), dans l'espace mélangeur (2) étant placés un arbre mélangeur (6), ainsi qu'une soupape (7), qui est associée à la sortie d'eau (5), l'arbre mélangeur (6) étant placé de manière déplaçable dans l'espace mélangeur (2) et étant susceptible de libérer et de fermer un conduit de dérivation (8) entre l'espace mélangeur (2) et la soupape (7), le conduit de dérivation (8) étant prévu au moins par segments à la parallèle de la sortie d'eau (5) et la soupape (7) étant susceptible d'être actionnée électriquement par une unité de contrôle (18), l'arbre mélangeur (6) comprenant un arbre creux (9) et un arbre enfichable (10) interne, lequel est réalisé en étant déplaçable le long d'un axe central (11) par rapport à l'arbre creux (9), **caractérisée en ce que** l'arbre creux (9) et l'arbre enfichable (10) sont contraints l'un contre l'autre par un élément à ressort (12).

2. Robinetterie sanitaire (1) selon l'une quelconque des revendications précédentes, sur laquelle l'arbre mélangeur (6) comporte un manche (13) qui est placé à l'extérieur d'un corps (14) de la robinetterie sanitaire (1).

3. Robinetterie sanitaire (1) selon l'une quelconque des revendications précédentes, sur laquelle le conduit de dérivation (8) est conçu de telle sorte que de l'eau s'écoulant le long de ce dernier puisse actionner la soupape (7).

4. Robinetterie sanitaire (1) selon l'une quelconque des revendications précédentes, sur laquelle la soupape (7) est une électrovanne.

5. Robinetterie sanitaire (1) selon l'une quelconque des revendications précédentes, sur laquelle est prévu un système d'actionnement (15) autosuffisant pour la soupape (7).
